Europäisches Patentamt

(19) European Patent Office

Office européen des brevets

(11) Publication number: **0 042 003**
**B1**

(12) **EUROPEAN PATENT SPECIFICATION**

(45) Date of publication of patent specification: **13.03.85**

(51) Int. Cl.⁴: **H 01 J 61/30,  H 01 J 61/36,**
**C 03 B 37/025,  C 03 C 25/06**

(21) Application number: **81900247.8**

(22) Date of filing: **17.12.80**

(86) International application number:
**PCT/US80/01679**

(87) International publication number:
**WO 81/01910 09.07.81 Gazette 81/16**

(54) **METHOD FOR FORMING A FUSIBLE SPACER FOR PLASMA DISPLAY PANEL.**

(30) Priority: **20.12.79 US 105849**

(43) Date of publication of application:
**23.12.81 Bulletin 81/51**

(45) Publication of the grant of the patent:
**13.03.85 Bulletin 85/11**

(84) Designated Contracting States:
**DE GB NL**

(56) References cited:
**DE-A-2 515 558**
**FR-A-2 438 017**
**GB-A-1 113 364**
**US-A-2 032 003**
**US-A-3 449 167**
**US-A-3 455 667**
**US-A-3 483 072**
**US-A-4 039 882**
**US-A-4 165 157**
**US-E- 27 560**

**W.H. Kohl, "Materials and techniques for electron tubes", 1962, Reinhold Publ., Corp., New York, N.Y., see pages 24,25,74,75,607-609**

(73) Proprietor: **UNITED TECHNOLOGIES CORPORATION**
**United Technologies Building 1, Financial Plaza Hartford, CT 06101 (US)**

(72) Inventor: **SNITZER, Elias**
**11 Fox Meadow Lane**
**West Hartford, CT 06107 (US)**
Inventor: **WISNIEFF, Robert Edward**
**23 Birch Hill**
**Weston, CT 06883 (US)**

(74) Representative: **Schmitz, Jean-Marie et al**
**Office Dennemeyer S.à.r.l. 21-25 Allée Scheffer**
**P.O. Box 41**
**L-2010 Luxembourg (LU)**

(56) References cited:
**IBM TECHNICAL DISCLOSURE BULLETIN, vol. 15, no. 8 January 1973 New York US M. BECKERMAN et al :"Gas panel sealant", pages 2518-2519**

**IBM TECHNICAL DISCLOSURE BULLETIN, vol. 20, no. 9, February 1978 New York, US S.GRIVJACK et al:"Display panel spherical spacers and application" page 3496**

Courier Press, Leamington Spa, England.

## Description

The present invention concerns a method for forming a fusible spacer used to hold the two sidewalls of plasma display panels. More particularly, it relates to a spacer device which is particularly well suited for initially setting the gap spacing between the sidewalls of a plasma panel and maintaining that initial gap spacing over the operating life of the plasma display panel.

Plasma display panels have been known generally for many years and are a type of display device which includes large glass plates, normally formed in a rectangular shape, to create front and rear sidewalls through which the display is viewed. The normally transparent sidewalls also act as substrates for a plurality of electrodes which are positioned on the inside of each sidewall. The electrodes on each substrate are normally equally spaced from adjacent electrodes. The two substrates are assembled so that parallel electrodes on one substrate form row electrodes while the parallel electrodes on the other substrate form column electrodes, the composite of which when viewed through a sidewall is a rectangular coordinate grid pattern. The two substrates do not touch and are spaced apart a small distance and the sidewalls are sealed around the edges to form a chamber or closed envelope. This chamber is initially evacuated and then is filled with an ionizable gas. In operation, an electrical discharge occurs in response to a voltage gradient of sufficient magnitude being impressed on a given row electrode and column electrode to define the site. One, or more discrete sites on the panel can be lit by electrically addressing the particular row and column electrode which define that discrete site.

In one manufacturing process for a plasma panel, the substrates forming each sidewall are normally manufactured separately. The electrodes are formed on each substrate and then the dielectric layer is positioned thereover as a frit. The frit consists of a slurry comprising an organic liquid vehicle and small particles of a lead silicate glass having a relatively low melting point. The slurry is applied over the electrodes on each substrate by a screening process, or the like, and the spacers are then located on the substrate. The organic liquid vehicle is baked off. Finally, the substrate is heated to a high temperature for a certain time period causing the glass frit to reflow thus forming a continuous and transparent dielectric layer over the electrodes with the spacers firmly attached. An electron emissive overcoat, if required, is then formed over the dielectric layer. At this point, a fusible seal is positioned around the perimeter of one substrate. The second substrate is then positioned on the first and the panel heated to cause a bonding of the perimeter seal to both sidewalls.

A particular problem with the prior art method of fabricating panels related to the fact that the spacers were not firmly bonded to each half of the panel. Generally, the spacer was well attached to the one substrate on which it was initially positioned because in the slurry bake-out portion of the manufacturing process the temperature and time cycle was sufficiently high to firmly attach the spacer to its initial sidewall. However the temperature during the final sealing process is normally lower than during the bake-out period and insufficient bonding often occurs between the spacer and the second substrate.

Another problem associated with the prior art method of fabricating plasma panels is that the spacers cause a distortion in the dielectric layer on one or both sidewalls in the area within close proximity of the spacer. This occurred because the spacer was located on each substrate when the dielectric frit was still in a liquid state. A wicking action would cause the liquid frit to creep up the side of the spacer causing a slight depression of the liquid immediately adjacent the spacer. Then, because the dielectric was thinner in this area, both the optical characteristics of the luminous picture elements showed a brightness variation at these points.

In the publication "IBM Technical Disclosure Bulletin" vol. 15, No. 8 (1973) pages 2518 and 2519 is disclosed a gas display panel wherein are used sealing materials consisting of hard-glass spacers comprising a heating strip within said hard-glass spacers and an outer seal frit. These spacers are sized to properly space the panel sidewalls and are located around the perimeter of the viewing area. The spacer is made of a ceramic material having a reflow temperature above that of the seal frit. Power is applied to the heating strip to locally raise the temperature to that required to reflow the seal frit but not the spacer.

The GB—PS 113 364 discloses a process for the production of coated glass articles comprising applying a coating of enamel powder in a viscous suspension to a surface of a shaped glass article and thereafter simultaneously fusing the enamel coating onto the glass article and drawing out the coated region under the influence of heat.

The object of the present invention is a method for forming a fusible spacer used to hold the two sidewalls of a plasma panel, comprising: forming an elongated core from a glass material having a relatively high softening point; forming a first cladding from a material which has a softening point in the range of 350°C to 500°C, positioning a second cladding on the first cladding, the second cladding being of the same material as said core, heating the fusible spacer beyond the softening point of said core material; drawing the fusible spacer until the diameter of the core is sized to match the desired spacing between the sidewalls of the panel; and etching the second cladding from the first cladding.

The fusible spacer of the present invention is used in a plasma display panel to rigidly bond sidewalls of a plasma panel together at a precise spacing.

According to a feature of the present invention, the sidewalls of a plasma panel can be reduced in thickness through the use of a number of spacers located between the sidewalls in the viewing area of the panel, thereby adding mechanical strength and rigidity to the composite structure. However, the spacers are sufficiently small and can be located between the row electrodes or column electrodes so as to not interfere with the electrical operation of the panel.

The fusible spacer rigidly adheres to both panel sidewalls thereby enhancing the ability of a plasma display panel to withstand pressure differentials across the panel sidewall. At ambient atmospheric pressures significantly below one atmosphere the gas pressure on the inside of the plasma panel causes a positive pressure differential across the sidewall which can cause outward bowing of the sidewall increasing the gap between the two sidewalls. The fusible spacer rigidly adheres to both sidewalls thereby resisting such outward bowing and more precisely maintaining the gap spacing between the sidewalls.

According to the present invention, a spacer for a plasma display panel includes a core of a refractory glass sized in accordance with the desired spacing between the panel sidewalls. A cladding of a solder glass material having a lower softening or melting point is located around the core material. In the manufacturing process the solder glass of the cladding firmly bonds to each half of the panel but the refractory glass of the core remains rigid to ensure proper spacing between the two halves.

In order that the invention may be fully understood, reference is made on the accompanying drawings wherein:

Fig. 1 is a drawing of an exploded view of an unassembled plasma panel depicting possible locations for the fusible spacers according to the present invention;

Fig. 2 is a view of an assembled plasma panel in cross section, showing the fusible spacer of the present invention separating the sidewalls of a plasma panel;

Fig. 3 is a perspective view of the fabrication technique for the fusible spacer according to the present invention having a refractory core surrounded by a solder glass cladding;

Fig. 4 is an edge view of only one sidewall of a plasma panel depicting one of the fusible spacers positioned thereon.

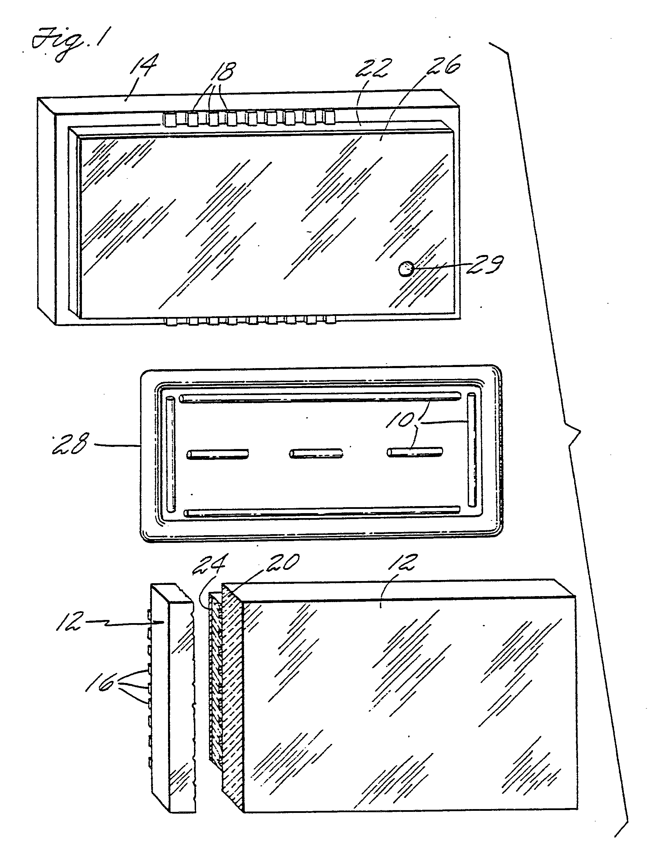

Referring initially to Fig. 1, there is seen an exploded view of a typical plasma panel and includes the fusible spacers 10 positioned for maintaining proper sidewall spacing. The plasma display panel comprises a front sidewall 12 and a rear sidewall 14 which are normally formed from a rectangular section of plate glass. At least the front sidewall 12 must be transparent so that the displayed image can be viewed therethrough. A plurality of row electrodes 16 (not shown to scale for ease of understanding) are positioned across the inside surface of the front sidewall 12, in an equally spaced configuration. In a similar manner, the rear sidewall 14 includes a plurality of column electrodes 18 (not shown to scale) positioned on its inside surface also in an equally spaced configuration. A dielectric layer 20 (not shown to scale) is positioned on the inner surface of the front sidewall 12 substantially covering the row electrodes 16, except for the end portions thereof. In a similar fashion, a dielectric layer 22 is positioned on the inner surface of the rear faceplate 14 covering all of the column electrodes 18, except for the end portions thereof. A secondary electron emissive overcoat 24 and 26, if required, can be used over the dielectric coating on the sidewalls 12 and 14, respectively. A seal 28 is located around the perimeter of the panel and closes the two sidewalls to form a sealed chamber or cavity.

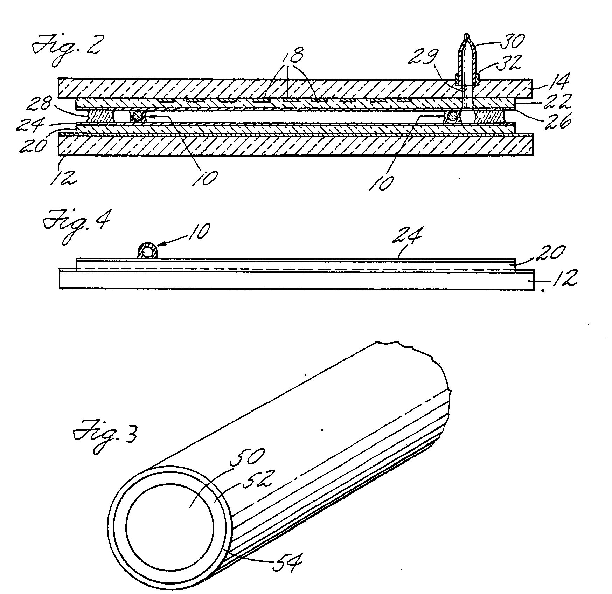

An opening 29 is provided through the rear sidewall 14 and a fill tube 30 (Fig. 2) is inserted therethrough so that the interior of the plasma panel can be filled with the ionizable gas. A seal 32 (Fig. 2) may be positioned around the base of the fill tube 30 to ensure the closed integrity.

Referring now to Fig. 3, there is seen a method for fabricating a fusible spacer according to the present invention. This spacer comprises a core 50 which is cylindrically shaped and fabricated from a transparent material with a relatively high melting or softening point, such as R-6 glass or the like. A cladding 52 surrounds the core 50 along at least a substantial portion of its length. The cladding 52 is formed from a material which has a softening point much lower than that of the core material, i.e. 350°C to 500°C. A second cladding 54 is positioned outside the first cladding and is of the same material as the core 50. This double cladding configuration allows for a dimensionally controlled fiber to be drawn, even though the first cladding 52 has a substantially lower softening point than the material of the core 50. The coaxial double clad material is drawn until the diameter of the core 50 is sized to match the desired spacing between the sidewalls of the plasma display panel. After the fiber is drawn, the cladding 54 is etched off with a suitable acid etch, such as hydrofluoric acid, or is otherwise removed without removing the solder glass to produce the fusible spacer of the invention.

The cross section of the core glass is shown as cylindrical in this embodiment of the invention; however, it is understood that other cross sections, such as rectangular or elliptical, are also possible. The essential requirement is that the transverse dimension of the spacer be chosen such as to give the proper spacing between the substrates in the sealed panel. It is also desirable that the thermal expansion coefficient of the core be roughly comparable with that of the material forming the panel sidewalls. Accordingly, if float glass plates are used for panel sidewalls one type of core material would be Kimble R-6 glass. Of course, it should be understood that if another material was used as the panel sidewalls, then it may be desirable to use another material for the core 50. If a cylindrical core is selected, then the diameter of the core 50 is sized to match the desired spacing between the two panel sidewalls in the assembled plasma panel. A typical diameter is 0.01 cm but it should be understood that other spacing could also be used.

The manufacturing process for a plasma panel employing the fusible spacers according to the present invention will now be described. Each panel sidewall is cut to the appropriate size as dictated by the desired size of the display face. Next, the electrodes are deposited on the substrates by one of the numerous well-known processes, such as vacuum deposition, stencil screening, photo etching, or the like. The electrodes are preferably fabricated from a conductive material, such as gold or aluminum, but in the case of a smaller panel, higher resistance electrodes fabricated from tin oxide or indium oxide, which are optically transparent, could also be used. If the electrodes are fabricated from the more opaque materials, i.e. metals, the width of each individual electrode would normally be as thin as reasonably possible so that the light discharge at each discrete site will not be blocked on its route to the panel sidewall to the viewer. If a thick film process is used, the dielectric layers 20 and 22 are then screened on the substrate as a frit. The frit consists of a slurry of small particles of a low melting transparent dielectric material, such as lead silica glass, with an organic liquid vehicle. The material is also selected such that its thermal expansion characteristics somewhat match the thermal expansion characteristics of the substrates to ensure continued bonding when subject to temperature cycling. If a thin film dielectric is employed, the requirement of matched thermal expansion coefficient is somewhat relaxed. For the thin film the dielectric material may be positioned on the substrates by one of the well-known methods of sputtering, electron beam deposition, or vapor deposition, or the like. Each dielectric layer should be smooth, without cracks, holes, dirt or other surface imperfections so that it will have a high and relatively constant breakdown voltage, i.e. on the order of 1000 volts. Because an electronic discharge occurs in the space getween the two sidewalls, the solid surface in contact with the gas should have a good secondary electron emissive capability. As shown in Fig. 1, an electron emissive overcoat 24 and 26 can be provided to produce such good secondary electron emission. The overcoat should be relatively transparent in that the light generated within the panel needs to pass out through the panel sidewalls to the viewer. One material well-suited as an emissive overcoat is magnesium oxide which can be applied to a thickness of 500 to 2000 Å by vacuum evaporation or sputtering.

After the dielectric layer and emissive overcoat are in position on the substrate, the fusible spacers can then be located in their designated position, such as that shown in Fig. 1, on the surface of the sidewall. A single fusible spacer 10 is shown in Fig. 4 located near one end of the front sidewall 12. Although no specific number or length of fusible spacer is required, spacers would normally be located near the perimeter of the panel as much as possible outside the primary viewing area. One or more spacers may also be located in the central portion of the viewing area to maintain the spacing under the differential pressure of the external atmosphere and the internal gas pressure (approximately one-half atmosphere). Because the potential exists for optical distortion or interference with the discrete discharge sites, an attempt is usually made to minimize the number of spacers within the primary viewing area and to locate them between electrodes. If the panel is to be used at high altitudes where a positive pressure could be exerted on the sidewalls, fusible spacers are normally positioned across the viewing area to prevent outward bowing or bending of the panel sidewalls.

Next the seal 28, which has preferably been bent or formed into a rectangular shape to match the size of the sidewalls, is positioned around the perimeter of one sidewall. The other sidewall is then properly located over the first panel and the two halves rigidly held in position, such as with a jig or the like. The plasma display panel is then heated for a predetermined length of time to a temperature which is sufficiently high to allow the seal and the solder cladding 52 to rigidly adhere to both sidewalls.

The final step of the manufacturing process involves the evacuation of the interior of the plasma panel, often by a vacuum pump attached to the tube 30. This process is also done at an elevated temperature to ensure that potentially contaminating gases are completely removed. The interior chamber is then back filled with the ionizable gas and the fill tube is pinched off sealing the chamber.

**Claim**

A method for forming a fusible spacer used to hold the two sidewalls of a plasma panel, comprising: forming an elongated core (50) from a glass material having a relatively high softening point; forming a first cladding (52) from a material which has a softening point in the range of 350°C to 500°C, positioning a second cladding (54) on the first cladding (52), the second cladding (54) being of the same material as said core (50); heating the fusible spacer beyond the softening point of said core material; drawing the fusible spacer until the diameter of the core (50) is sized to match the desired spacing between the sidewalls of the panel; and etching the second cladding (54) from the first cladding.

**Patentanspruch**

Verfahren zum Formen eines schmelzbaren Distanzstückes, das dazu benutzt wird die zwei Seitenwände einer Plasmazuzeigetafel zu stützen, mit den Verfahrensschritten des Formens eines länglichen Kernes (50) aus Glasmaterial mit einem relativ hohen Erweichungspunkt; des Bildens eines ersten Belages (52) aus einem Material, das einen Erweichungspunkt im Bereich von 350°C bis 500°C hat, des Aufbringens eines zweiten Belages (54) auf dem ersten Belag (52), wobei der zweite Belag (54) aus dem gleichen Material ist wie der Kern (50); des Erwärmens des schmelzbaren Distanzstückes über den Erweichungspunkt des Kernmaterials hinaus; des Ziehens des schmelzbaren Distanzstückes bis der Durchmesser des Kernes (50) von solcher Grösse ist, dass sie mit dem gewünschten Abstand zwischen den Seitenwänden der Tafel übereinstimmt; und des Wegätzens des zweiten Belages (54) vom ersten Belag (52).

**Revendication**

Une méthode pour fabriquer une entretoise fusible utilisée pour maintenir deux parois latérales d'un panneau à plasma, comprenant: former un noyau allongé (50) à partir d'un verre ayant un point de ramollissement relativement élevé; former un premier revêtement (52) à partir d'une matière ayant un point de ramollissement dans l'intervalle de 350°C—500°C, positionner un second revêtement (54) sur le premier revêtement (52), le second revêtement (54) étant en la même matière que ce noyau (50); chauffer cette entretoise au-delà du point de ramollissement de cette matière du noyau; étirer l'entretoise fusible jusqu'à ce que le diamètre du noyau (50) soit dimensionner pour s'ajuster à l'écartement souhaité entre les parois latérales du panneau; séparer par décapage le second revêtement (54) du premier revêtement.

*Fig.1*

0 042 003

*Fig. 2*

*Fig. 4*

*Fig. 3*

2